(19) Europäisches Patentamt

European Patent Office

Office européen des brevets

(11) **EP 0 905 089 A1**

(12) **DEMANDE DE BREVET EUROPEEN**

(43) Date de publication:
31.03.1999 Bulletin 1999/13

(51) Int. Cl.$^6$: **C01G 49/10**

(21) Numéro de dépôt: 97870145.6

(22) Date de dépôt: 26.09.1997

(84) Etats contractants désignés:
AT BE CH DE DK ES FI FR GB GR IE IT LI LU MC
NL PT SE
Etats d'extension désignés:
AL LT LV RO SI

(71) Demandeur: Galva 2000
6250 Pont-du-Loup (BE)

(72) Inventeurs:
• Warichet, David
1030 Bruxelles (BE)

• Bourgeois, Sabine
6060 Gilly (BE)
• Van Lierde, A.
1180 Bruxelles (BE)
• De Maeyer, Patrick
4020 Liege (BE)

(74) Mandataire:
Van Malderen, Joelle et al
Office Van Malderen,
Place Reine Fabiola 6/1
1083 Bruxelles (BE)

(54) **Procédé de traitement des solutions usées de décapage**

(57) Procédé de traitement de solutions usées de décapage en vue de l'obtention de solutions de chlorure ferreux suffisamment concentrées en fer total et appauvries en zinc et autres impuretés métalliques.

Trois étapes opératoires sont utilisées successivement :

- une première étape de neutralisation de l'acide usé de décapage par réaction entre l'acide résiduel constitué essentiellement de HCl et des oxydes ou hydroxydes de fer constitués essentiellement de $Fe_2O_3$, $Fe_3O_4$, $FeOOH$, $Fe(OH)_3$;

- une deuxième étape de réduction du fer ferrique ($Fe^{3+}$) présent dans les bains par du fer métal; et

- une troisième étape d'élimination des métaux lourds, en particulier $Zn^{2+}$, $Pb^{2+}$, $Sn^{2+}$, $As^{3+}$, $Cu^{2+}$, $Co^{2+}$, $Ni^{2+}$, $Cd^{2+}$ sous forme de sulfures par précipitation.

On obtient une solution utilisable dans des conditions économiques pour la production de chlorure ferrique ou dans des stations dépuration d'eaux usées ou d'effluents.

Figure 1 : Flowsheet de traitement des bains usés de décapage

## Description

### Objet de l'invention

La présente invention concerne un procédé de traitement de solutions usées de décapage en vue de l'obtention de solutions de chlorure ferreux suffisamment concentrées en fer total et appauvries en zinc et autres impuretés métalliques pour qu'elles puissent être recyclées dans de bonnes conditions économiques, notamment pour la fabrication de chlorure ferrique ou par des exploitants de station d'épuration d'eaux usées ou d'effluents.

L'invention porte en particulier sur le traitement des acides usés de décapage issus des usines de galvanisation à chaud, notamment la galvanisation à façon de différents types de pièces, la galvanisation de tubes, la galvanisation de fils, la galvanisation de coils, et notamment le traitement de solutions de décapage dont la composition correspond à 0,5-25 g/l Zn, 10-60 g/l HCl et 60-150 g/l $Fe^{tot}$.

### Arrière-plan technologique

Actuellement, les bains de décapage usés sur base chlorhydrique sont traités le plus souvent par des installations physico-chimiques et les boues générées sont ensuite conditionnées et mises en décharge, ce qui actuellement entraîne des nuisances et des coûts de plus en plus élevés.

Il serait donc intéressant de rendre les bains usés recyclables dans de bonnes conditions dans l'industrie minérale et particulièrement pour la production de composés de fer tels que le chlorure ferrique, le chlorure ferreux, le chlorosulfate ferrique, etc., ce qui impose à la fois l'obtention d'une teneur en fer suffisamment élevée et l'abaissement des teneurs en impuretés résiduaires sous des deuils fort bas.

La difficulté majeure résulte principalement dans la nécessité d'éliminer les métaux lourds présents dans les bains usés.

En galvanisation, il s'agit principalement du zinc et du plomb mais aussi du nickel, du cuivre, du chrome, de l'étain, de l'arsenic, du cadmium, etc. qui peuvent également être présents dans ces bains.

L'invention vise à résoudre cette difficulté en proposant une technique à la fois économique et rentable et qui réduit fortement, voir supprime, les mises en décharge.

### Eléments caractéristiques de l'invention

Le procédé de l'invention se caractérise par au moins trois étapes opératoires successives, à savoir :

- une première étape de neutralisation de l'acide usé de décapage par réaction entre l'acide résiduel (HCl) et des oxydes ou hydroxydes de fer ($Fe_2O_3$, $Fe_3O_4$, FeOOH, $Fe(OH)_3$, ...) ou des carbonates ($Fe_2CO_3$, ...), selon des réactions du type :

$$3\ HCl + Fe(OH)_3 \rightarrow FeCl_3 + 3\ H_2O;$$

- une deuxième étape de réduction du fer ferrique ($Fe^{3+}$) présent dans les bains par du fer métal, selon une réaction du type :

$$2\ FeCl_3 + Fe \rightarrow 3\ FeCl_2, \text{ et}$$

- une troisième étape d'élimination des métaux lourds (en particulier $Zn^{2+}$, $Pb^{2+}$, $Sn^{2+}$, $As^{3+}$, $Cu^{2+}$, $Co^{2+}$, $Ni^{2+}$, $Cd^{2+}$, etc.) sous forme de sulfures par précipitation, selon une réaction de type :

$$ZnCl_2 + NaHS \rightarrow ZnS + HCl + NaCl$$

Il convient de noter que la première et la deuxième étapes constituent une procédure obligatoire préalable à la troisième étape. En effet, vu la présence d'inhibiteurs dans les effluents, on ne peut sans neutralisation traiter la solution par du fer métallique, par exemple sous forme de mitraille. Par contre, la réduction sur les mitrailles du $Fe^{3+}$ en $Fe^{++}$ n'est pas conditionnée par la présence de ces inhibiteurs, d'où l'originalité de consommer l'HCl en formant du $FeCl_3$ et de réduire $FeCl_3$ en $FeCl_2$, étant donné qu'il est nécessaire d'être en présence de $Fe^{++}$ pour précipiter les métaux lourds sans consommation excessive de $Na_2S$.

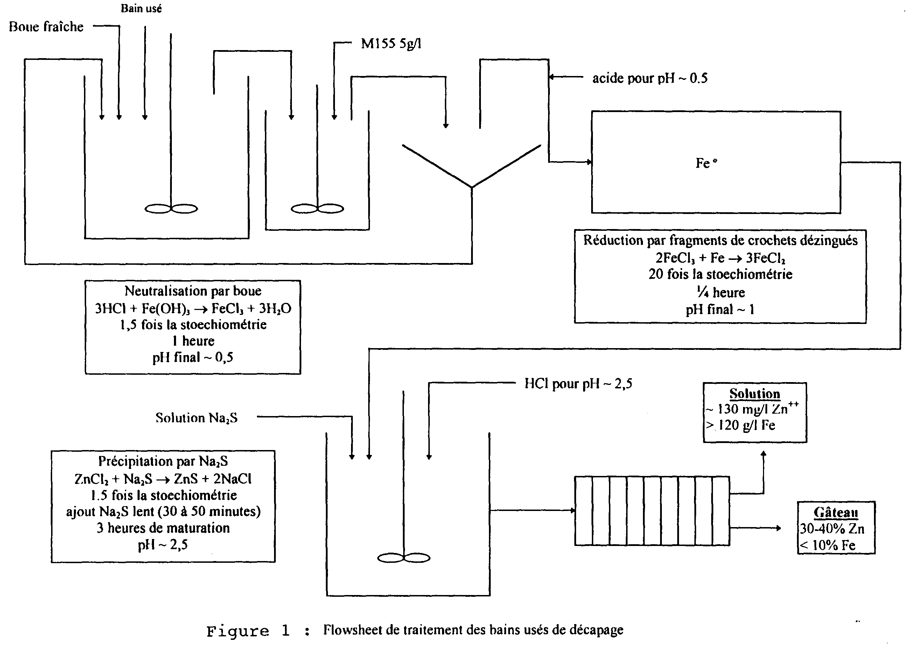

Ces différentes étapes opératoires sont illustrées dans la figure 1 annexée sous forme de schéma opératoire (flow sheet).

Les conditions opératoires de la première étape reposent sur l'utilisation d'une boue formée principalement d'hydroxyde et d'oxyde de fer en suspension dans l'eau, cette boue étant ajoutée en quantité suffisante pour neutraliser l'acidité libre de la solution usée de décapage, le produit résultant étant constitué essentiellement de chlorure ferrique. Une technique avantageuse pour réaliser cette opération est une lixiviation des boues par la solution d'acide qui peut être exécutée à la température ordinaire.

Une source avantageuse pour la boue de neutralisation est constituée par un gâteau d'hydroxyde de fer issu du traitement de boues de rinçage ou du flux de galvanisation, débarrassé de la majeure partie du chlorure d'ammonium de manière à ne pas polluer la solution de $FeCl_2$ par des ions $NH_4^+$ au-delà des limites admises.

A titre d'exemple, ceci peut être avantageusement réalisé en milieu aqueux par une réaction chimique entre le $NH_4Cl$ présent dans la boue et de la chaux ajoutée en léger excès de manière à décomposer le $NH_4Cl$ et dégager du $NH_3$ gazeux qui est ensuite capté par une solution d'HCl pour reformer du $NH_4Cl$ utilisable comme composant du flux. Ce traitement s'effectue de préférence à une température de l'ordre de 90 °C.

Les réactions visées compte tenu de la présence de $ZnCl_2$ dans la boue sont les suivantes :

$$2\ NH_4Cl + Ca(OH)_2 \rightarrow 2\ NH_3\nearrow + CaCl_2 + 2\ H_2O \quad ZnCl_2 + Ca(OH)_2 \rightarrow Zn(OH)_2 + CaCl_2$$

Le traitement est réalisé de préférence sur une solution de décapage usée titrant au moins 50 g/l HCl, avec une boue provenant du déferrage du flux utilisée contenant maximum 5% $NH_4Cl$ sur humide. Dans ce cas, en effet, en prétraitant la boue à 90 °C par une quantité de chaux correspondant à 1,25 fois la stoechiométrie par rapport à ce qui est nécessaire pour transformer le $NH_4Cl$ et le $ZnCl_2$, la teneur en $NH_4Cl$ de la boue serait ramenée à 0,5%, ce qui est suffisant pour que la teneur $NH_4^+$ de la solution neutralisée soit inférieure à 500 mg/1. Dans ce cas, la teneur Ca de cette solution atteindrait environ 9 g/1.

Lors de ce prétraitement, 80% du $NH_4Cl$ peut être récupéré après absorption des vapeur d'ammoniac dans une solution de HCl. La boue sera ensuite de préférence filtrée, mais non lavée, et que le filtrat sera recyclé continuellement à l'étape de prétraitement, de manière à ce que la totalité du $CaCl_2$ formé se retrouve finalement sans la solution imprégnant le gâteau et ensuite dans la solution neutralisée. Dans les conditions générales précitées, l'apport de $CaCl_2$ à cette solution ne sera pas préjudiciable.

La neutralisation de la première étape doit être menée jusqu'à une acidité libre résiduelle imposée par le bon fonctionnement de la réduction ultérieure du $Fe^{3+}$ dans la deuxième étape. Il faut notamment éviter que lors de la réduction il y ait précipitation du $Fe^{3+}$ par manque d'acidité ou que l'acidité reste trop élevée, ce qui engendrerait la formation d'$H_2S$ lors de la précipitation ultérieure du zinc dans la troisième étape. L'exemple 1 qui suit illustre la façon d'opérer.

Avantageusement, on utilise un excès de boue, mais ceci impose d'éliminer cet excès après la neutralisation de manière à éviter toute présence de solide lors de la réduction de la deuxième étape et de recycler à l'étape de neutralisation ce qui n'a pas réagi. L'exemple 1 illustre une technique préconisée.

Le moyen choisi pour récupérer les matières solides résiduelles de l'excès de boue de neutralisation peut être une simple décantation après floculation notamment par du Magnafloc 155. L'underflow du décanteur est recyclé à la cuve de neutralisation. En procédant de la sorte, on finit par utiliser totalement les hydroxydes de fer mis en jeu et on économise l'investissement d'un filtre. La présence de solution imprégnante dans l'underflow du décanteur ne perturbera en outre en aucune manière l'étape de neutralisation. Tout au plus, cela entraînera une légère augmentation du volume de la cuve de neutralisation, mais sans aucune dilution. L'exemple 2 illustre cette opération.

Le fer métal utilisé dans la deuxième étape peut provenir de tournures, de scraps, de morceaux de fer divers. Dans la deuxième étape, le fer métal ajouté devrait être alimenté selon la théorie en proportions définies par la quantité de $Fe^{3+}$ initiale de la solution résultant de la première étape, mais en pratique, la deuxième étape du procédé s'effectue de préférence en recourant à de grands excès de fer par rapport à la stoechiométrie, ce qui permet d'arriver alors à une réaction rapide. On opère généralement à la température ordinaire. L'exemple 3 illustre cette opération.

La troisième étape de traitement des bains usés de décapage consiste à purifier la solution en éliminant le zinc présent avec le rendement le plus élevé possible.

La source des sulfures ajoutés dans la troisième étape peut être :

- $H_2S$,
- les sulfures alcalins : $Na_2S$, $K_2S$, ...
- les hydrosulfures alcalins : NaHS, KHS, ...
- les sulfures alcalino-terreux : CaS, BaS, ...
- le sulfure de fer : FeS
- les polysulfures : $Na_2S_2$, ...
- les sels de l'acide xanthique : $C_3H_2OKS_2$
- d'autres sulfures organiques

Dans cette troisième étape se produit la précipitation du zinc et de la plupart des impuretés sous forme de sulfures. Dans ce cas, les conditions opératoires (pH, temps, excès de sulfure) doivent être bien choisies de manière à limiter la formation d'$H_2S$ tout en précipitant quasi totalement le zinc et les autres métaux lourds mais avec le minimum de fer.

Selon les conditions opératoires déterminées, il convient de préférence de réaliser la précipitation du zinc et autres métaux à un pH constant compris entre 2 et 3 si on veut limiter le dégagement d'$H_2S$. Cette précipitation doit en outre être réalisée lentement avec une solution de $Na_2S$ assez concentrée (150 g/1) pour éviter toute dilution excessive et donc maintenir une concentration suffisante en fer dans la solution. L'exemple 4 illustre la technique préconisée.

## Exemple 1 : neutralisation de bains de décapage usés

La solution de décapage usée traitée présente la composition suivante :

| | |
|---|---|
| $H^-$ : | 2,72 g/l |
| pH : | 0,43 |
| $Fe^{tot}$ : | 108 g/l |
| $Fe^{++}$ : | 100 g/l |
| $Zn^{++}$ : | 8,86 g/l |

La neutralisation a été réalisée par une boue titrant 25,65% Fe, 49,26% $H_2O$, 0,83% $NH_4Cl$ et 0,37% Zn. Les essais de neutralisation ont eu pour objet de :

- préciser le pH de fin de neutralisation à atteindre pour éviter tout problème lors de la réduction ultérieure; et
- définir les conditions opératoires les plus favorables, notamment la quantité de boue à mettre en jeu et le temps de réaction pour arriver à ce pH en travaillant à température ambiante.

Lors de ces essais, on a toujours réalisé la réduction durant 15 minutes en soumettant la solution neutralisée à l'action d'une masse importante de fils d'accrochage dézingués et déchiquetés à moins de 20 mm.

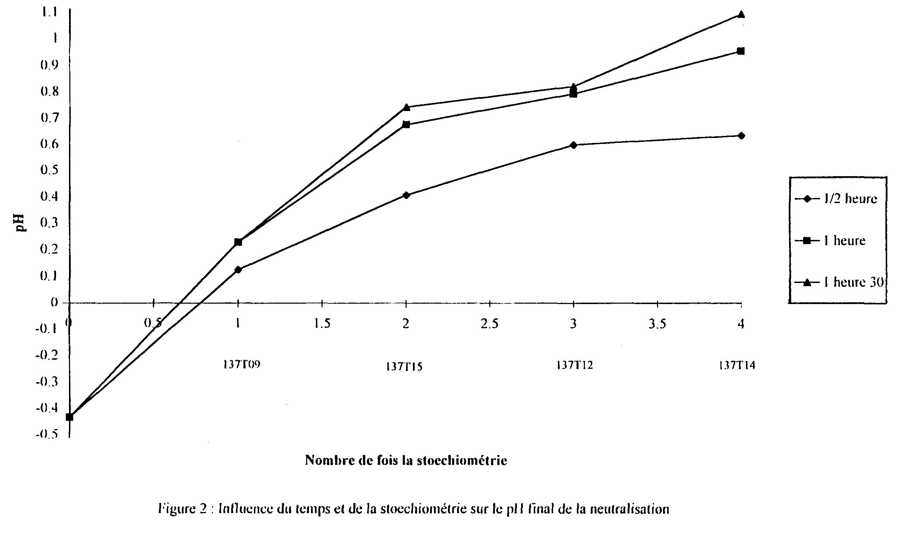

Les conditions opératoires et les résultats de ces essais sont donnés au tableau 1. L'évolution du pH au cours de la neutralisation en fonction du temps de réaction et de la masse de boue utilisée, exprimée en nombre de fois la stoechiométrie nécessaire pour neutraliser tout l'acide libre, est de plus donnée à la figure 2 en annexe.

On peut tirer de ces essais les conclusions suivantes :

- le pH variant de façon non négligeable lors de l'étape de réduction, il est nécessaire d'arrêter la neutralisation à une valeur de pH voisine de 0,5 si on veut maintenir en fin de réduction un pH voisin de 1;
- les courbes de la figure 2 correspondant à un temps de réaction d'une heure ou une heure et demi présentent une évolution tout à fait comparable alors que la courbe relative à un temps plus court (1/2 heure) est nettement plus basse;
- différents cas sont possibles pour arriver à l'objectif visé :

   - soit travailler avec 1,5 fois la stoechiométrie pendant 1 heure; si dans ce cas, le temps était plus long, il n'y aurait pas de modification sensible du pH;
   - soit travailler avec 2 fois la stoechiométrie pendant 1/2 heure seulement. Notons que le recours à une neutralisation aussi rapide n'entraînerait guère de perturbations notables si l'excès de boue était plus important (2,5 ou même 3 fois la stoechiométrie).

Si ces deux manières de travailler sont assez équivalentes du point de vue neutralisation, il n'en va pas de même au niveau de l'effet de dilution de la solution par l'eau imprégnant les boues. On choisira donc d'utiliser plutôt 1,5 fois la stoechiométrie durant 1 heure, ce qui permet de conserver un pH final qui ne varie pas trop si la boue reste plus longtemps en contact avec l'acide, et de maintenir la concentration fer de la solution à un niveau plus élevé.

En neutralisant durant 1 heure un litre d'acide par 1,5 fois la quantité stoechiométrique de boue, on obtient en fait une solution dont la teneur $H^+$ est de 0,2 g/l (pH = 0,54). Les teneurs $Fe^{tot}$ et $Fe^{2+}$ s'élèvent à respectivement 131 et 97,5 g/1.

## Exemple 2 : floculation de l'excès de boue résiduaire après neutralisation de la solution de décapage

Plusieurs essais de décantation ont été effectués à partir de la solution acide à 100 g/1 HCl neutralisée durant 1 heure avec 1,5 fois la stoechiométrie de boues de manière à déterminer la quantité exacte de floculant à ajouter.

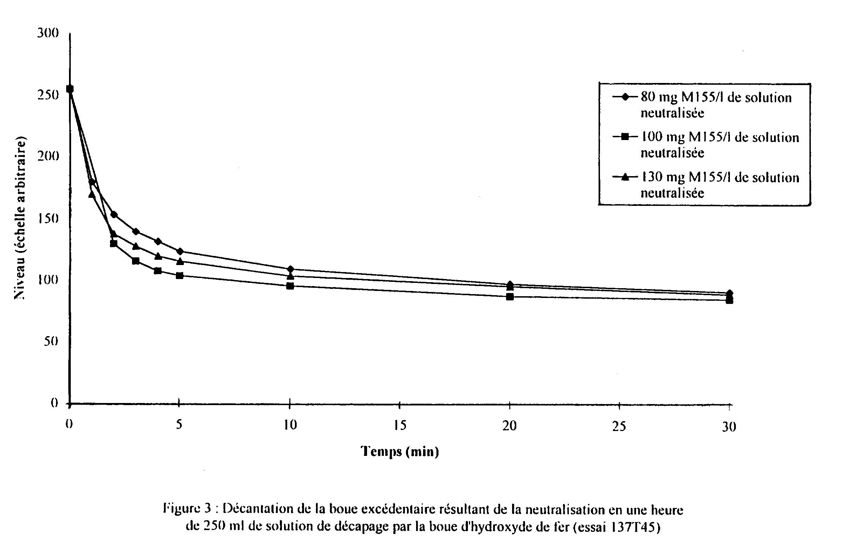

Les résultats obtenus en traitant 250 ml de solution usée neutralisée à pH 0,5 sont repris à la figure 3 en annexe. On y remarque qu'après 20 à 30 minutes de décantation en batch, la pulpe se sépare en deux : environ 2/3 du volume est une solution limpide apte à la réduction le 1/3 restant est une pulpe épaisse contenant environ 270 g/l de solide qui peut être recyclée.

Cette étape peu coûteuse et extrêmement rapide, puisqu' après quelques minutes l'overflow est déjà limpide, paraît donc judicieuse pour, d'une part fournir à l'étape de réduction une solution limpide et d'autre part, recycler la boue qui n'a pas réagi.

Il peut être utile de prévoir, après cette étape, une régulation de pH de manière à corriger ce dernier si la neutralisation a été trop forte ou si elle s'est poursuivie lors de la décantation. De cette manière, le pH de la solution à réduire pourrait toujours être fixé à sa valeur optimale de 0,5.

## Exemple 3 : réduction du Fe$^{3+}$

Quelques essais ont été réalisés ainsi, les résultats les plus significatifs ont été obtenus en utilisant un excès de fer métal correspondant à 20 fois la stoechiométrie, c'est-à-dire dans notre cas 2 kg de fragments par litre d'acide traité. Dans ces conditions, la réaction est très rapide et se déroule en 1/4 d'heure comme le montre le tableau 2.

## Exemple 4 : élimination du zinc et d'autres métaux lourds

Un premier essai a été effectué avec une quantité de $Na_2S$ correspondant à 1,5 fois la stoechiométrie. Le précipitant a été ajouté en 30 minutes à l'aide d'une pompe doseuse. Le précipité a mûri ensuite durant 3 heures dans son milieu. Il a finalement été filtré et lavé à l'eau déminéralisée. Les résultats détaillés sont présentés au tableau 3.

Quant au gâteau de ZnS, dont le poids correspond à 7,9 g pour 430 ml de solution traitée, il présente la composition suivante sur sec :

Fe$^{tot}$ :        9,66%
Zn :        37,2%
S$^{tot}$ :        34,4%
Cl :        4,49%
S$^o$ :        14,76%

A partir de tous ces résultats, il est possible de calculer les bilans soufre pour évaluer la perte sous forme d'$H_2S$. la quantité de soufre apportée peut être estimée par deux méthodes :

-        à partir du $Na_2S$ ajouté, soit 2,84 g de S
-        par bilan sur le $Na^+$ retrouvé en solution, soit 2,86 g de S

La quantité de soufre retrouvée dans le précipité sous les différentes formes correspond à :

| ZnS | 1,44 g de S | 50,73% |
|---|---|---|
| FeS | 0,12 g de S | 4,15% |
| S$^o$ | 1,17 g de S | 41,06% |
| Total : | 2,72 g de S | |

Si l'on se base sur l'apport de soufre estimé à partir du $Na_2S$ ajouté, la perte de S sous forme de $H_2S$ serait de 0,12 g, soit 4,06%. On constate que la perte d'$H_2S$ est tout à fait raisonnable et que la concentration en Zn de la solution a pu être abaissée en dessous de 130 mg/l. Les résultats obtenus sont détaillés au tableau 4.

Ces exemples correspondent à des opérations réalisées en "batches" à l'échelle du laboratoire. Le passage en régime continu permet d'atteindre des valeurs de teneur résiduelle en zinc de l'ordre de 50 mg/l.

Le gâteau recueilli (8,8 g sec pour 410 ml de solution traitée) présente les caractéristiques chimiques suivantes :

Fe$^{tot}$ :        6,35%
Zn :        40,78%

$S^{tot}$ : 34,7%
Cl : 2,28%
$Na^+$ : 0,06%
$S^o$ : 13,2%

Le calcul du bilan soufre montre à nouveau que :

- la quantité de soufre apportée :

 - a partir du $Na_2S$ ajouté : 3,25 g de S
 - par bilan sur le $Na^+$ retrouvé : 3,18 g de S

- la quantité de S retrouvée sous les différentes formes dans le gâteau :

| | | |
|---|---|---|
| ZnS | 1,76 g de S | 54,09% |
| FeS | 0,14 g de S | 4,29% |
| $S^o$ | 1,16 g de S | 35,7106% |

Le total du S retrouvé est donc de 3,06 g, ce qui représente 94,09% du soufre introduit sous forme de $Na_2S$. La perte de soufre (0,19 g) correspond dès lors à 5,91%.

En augmentant la masse de $Na_2S$ mise en jeu, on n'a guère amélioré la précipitation du zinc (120 mg au lieu de 130). Pour arriver en dessous de 1 00 mg/l dans une solution aussi riche en fer, il faudrait dès lors accroître encore nettement l'ajout de $Na_2S$, mais alors on provoquerait une dilution préjudiciable de la solution de fer. De plus, le dégagement d'$H_2S$ serait plus important.

Il convient de noter que lors de la précipitation du Zn, d'autres métaux lourds précipitent aussi, notamment le cuivre, le cobalt et le plomb ainsi que le montrent les résultats des analyses chimiques reprises au tableau 5.

Dans le mémoire descriptif et dans les revendications, la référence à trois étapes opératoires consécutives signifie que ces trois étapes sont mises en oeuvre l'une après l'autre dans l'ordre indiqué mais ceci n'exclut pas que des étapes intercalaires, notamment des étapes d'épuration, de concentration ou tout autre type de traitement puissent être intercalées entre les différentes étapes.

Bien qu'on ait décrit des formes d'exécution particulièrement préférées de l'invention, en particulier en référence à des exemples spécifiques d'exécution, il doit être bien entendu que de nombreuses variantes opératoires restent possibles dans le cadre de l'invention tel qu'il est défini par les revendications qui suivent.

Tableau 1

| Essais de neutralisation | | | | | |
|---|---|---|---|---|---|
| Conditions (*) | Temps neutral. (min) | pH final neutral. | Temps réduction (min) | pH final réduction | $Fe_t^{tot} = Fe^{++}$ (g/l) |
| 1 | 60 | 0,2 | 15 | 0,5 | 150 |
| 1,5 | 60 | 0,5 | 15 | 1,05 | 160 |
| 2 | 30 | 0,5 | 15 | 0,7 | 135 |
| | 60 | 1 | 15 | 1,3 | 145 |
| | 180 | 1,05 | 15 | 1,9 | 145 |
| 3 | 300 | 1,5 | 30 | 2,3 | 135 |
| 4 | 120 | 1,3 | 15 | 1,9 | 120 |

*: la condition est exprimée en nombre de fois la stoéchiométrie

Tableau 2

| Essai de réduction de $Fe^{3+}$ en $Fe^{2+}$ avec une quantité de fragments correspondant à 20 fois la stoéchiométrie | | | | |
|---|---|---|---|---|
| | H+ (g/l) | pH | $Fe^{tot}$ (g/l) | $Fe^{2+}$ (g/l) |
| Acide de départ | 2,72 | -0,43 | 108 | 100 |
| Après neutralisation optimale | 0,29 | 0,54 | 146 | 135 |
| Après réduction 15 min | 0,09 | 1,05 | 163 | 163 |

Tableau 3

| Essai de précipitation du Zn par $Na_2S$ (1,5 fois la stoéchiométrie) | | | | | | | | |
|---|---|---|---|---|---|---|---|---|
| | Temps (min) | $H^+$ (g/l) | pH | $Fe^{tot}$ (g/l) | $Fe^{2+}$ (g/l) | $Zn^{2+}$ (g/l) | $Na^+$ (g/l) | η précipitation (%) |
| Solution réduite | 0 | 0,09 | 1,05 | 163 | 153 | 8,95 | 0,13 | - |
| Après ajout du $Na_2S$ | 30 | - | - | 143 | 137 | 0,18 | - | - |
| Maturation | 60 | - | - | 153 | 149 | 0,16 | - | - |
| | 90 | - | - | 155 | 140 | 0,15 | - | - |
| | 120 | - | - | 145 | 138 | 0,15 | - | - |
| | 150 | - | - | 140 | 136 | 0,14 | - | - |
| | 180 | - | - | 143 | 140 | 0,14 | - | - |
| | 210 | - | 2,24 | 148 | 144 | 0,13 | 8,31 | 98,87 |

Tableau 4

| Essai de précipitation du Zn par $Na_2S$ (1,8 fois la stoéchiométrie) | | | | | | | | |
|---|---|---|---|---|---|---|---|---|
| | Temps (min) | $H^+$ (g/l) | pH | $Fe^{tot}$ (g/l) | $Fe^{2+}$ (g/l) | $Zn^{2+}$ (g/l) | $Na^+$ (g/l) | η précipitation (%) |
| Solution réduite | 0 | 0,16 | 0,80 | 155 | 155 | 8,33 | < 0,01 | - |
| Après ajout du $Na_2S$ | 50 | - | - | 140 | 140 | 0,18 | - | - |
| Maturation | 110 | - | - | 139 | 138 | 0,12 | - | - |
| | 170 | - | - | 134 | 133 | 0,12 | - | - |
| | 230 | - | 2,31 | 1415 | 140 | 0,12 | 9,16 | 98,53 |

Tableau 5

| Précipitation des métaux lourds avec le zinc | | | | | | |
|---|---|---|---|---|---|---|
| | Cu (mg/l) | Ni (mg/l) | Co (mg/l) | Cr (mg/l) | Mn (mg/l) | Pb (mg/l) |
| Après neutralisation | 165 | 78 | 5,9 | 130 | 575 | 160 |
| Après précipitation (1,8 fois stoéchiométrie) | < 10 | 85 | 3,1 | 103 | 585 | < 10 |

**Revendications**

1. Procédé de traitement de solutions usées de décapage en vue de l'obtention de solutions de chlorure ferreux suffisamment concentrées en fer total et appauvries en zinc et autres impuretés métalliques, caractérisé en ce qu'il comporte au moins trois étapes opératoires successives :

   - une première étape de neutralisation de l'acide usé de décapage par réaction entre l'acide résiduel constitué essentiellement de HCl et des oxydes ou hydroxydes de fer tels que $Fe_2O_3$, $Fe_3O_4$, FeOOH, $Fe(OH)_3$;
   - une deuxième étape de réduction du fer ferrique ($Fe^{3+}$) présent dans les bains par du fer métal; et
   - une troisième étape d'élimination des métaux lourds, en particulier $Zn^{2+}$, $Pb^{2+}$, $Sn^{2+}$, $As^{3+}$, $Cu^{2+}$, $Co^{2+}$, $Ni^{2+}$, $Cd^{2+}$ sous forme de sulfures par précipitation.

2. Procédé selon la revendication 1, caractérisé en ce que la neutralisation de l'acide usé dans la première étape est réalisée à l'aide d'une boue de neutralisation constituée par un gâteau d'hydroxyde de fer issu du traitement de flux de galvanisation ou de bains de rinçage.

3. Procédé selon la revendication 2, caractérisé en ce que l'on réduit au préalable la teneur de ladite boue de neutralisation en chlorure d'ammonium à une quantité inférieure à 500 mg/1 en milieu aqueux notamment par une réaction chimique entre le $NH_4Cl$ présent dans la boue et de la chaux ajoutée en léger excès en dégageant du $NH_3$ gazeux qui est ensuite capté par une solution d'HCl pour reformer du $NH_4Cl$ utilisable comme composant du flux.

4. Procédé selon l'une quelconque des revendications précédentes, caractérisé en ce que la neutralisation de la première étape est menée jusqu' à l'acidité libre résiduelle imposée par le bon fonctionnement de la réduction ultérieure du $Fe^{3+}$ dans la deuxième étape.

5. Procédé selon l'une quelconque des revendications précédentes, caractérisé en ce que l'on utilise un excès de boue par rapport à la stoechiométrie, on élimine cet excès après la neutralisation de manière à éviter toute présence de solide lors de la réduction de la deuxième étape et on recycle à l'étape de neutralisation ce qui n'a pas réagi.

6. Procédé selon la revendication 5, caractérisé en ce que les matières solides résiduelles de l'excès de boue de neutralisation sont récupérées par une décantation après floculation.

7. Procédé selon l'une quelconque des revendications précédentes, caractérisé en ce que dans la deuxième étape, le fer métal ajouté est en excès par rapport à la quantité de $Fe^{3+}$ initiale résultant de la solution résultant de la première étape.

8. Procédé selon la revendication 7, caractérisé en ce que le fer métal utilisé dans la deuxième étape provient de tournures, de scraps, de morceaux de fer divers.

9. Procédé selon l'une quelconque des revendications précédentes, caractérisé en ce que la précipitation du zinc et de la plupart des impuretés à l'aide de $Na_2S$ ou équivalent dans cette troisième étape se produit dans des conditions opératoires (pH, temps, excès de sulfure) choisies de manière à limiter la formation d'$H_2S$ tout en précipitant quasi totalement le zinc et les autres métaux lourds.

10. Procédé selon la revendication 9, caractérisé en ce que la source des sulfures ajoutés dans la troisième étape est :

- $H_2S$,
- les sulfures alcalins tels que $Na_2S$, $K_2S$
- les hydrosulfures alcalins tels que NaHS, KHS
- les sulfures alcalino-terreux tels que CaS, BaS
- le sulfure de fer : FeS
- les polysulfures tels que $Na_2S_2$
- les sels à base d'acide xanthique
- d'autres sulfures organiques.

11. Procédé selon l'une quelconque des revendications précédentes, caractérisé en ce que l'on réalise la précipitation du zinc et autres métaux à un pH constant compris entre 2 et 3 en vue de limiter le dégagement d'$H_2S$, de maximiser le rendement de la précipitation du zinc et de minimiser celui du fer, par addition lente d'une solution de $Na_2S$ assez concentrée pour éviter toute dilution excessive et maintenir ainsi une concentration suffisante en fer dans la solution.

12. Utilisation des produits résultant de procédé selon l'une quelconque des revendications précédentes sous forme recyclée notamment pour la production de chlorure ferrique.

Figure 1 : Flowsheet de traitement des bains usés de décapage

EP 0 905 089 A1

Figure 2 : Influence du temps et de la stoechiométrie sur le pH final de la neutralisation

Figure 3 : Décantation de la boue excédentaire résultant de la neutralisation en une heure de 250 ml de solution de décapage par la boue d'hydroxyde de fer (essai 137T45)

**Office européen des brevets**

## RAPPORT DE RECHERCHE EUROPEENNE

Numéro de la demande

EP 97 87 0145

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 591 489 A (GREMM WALTER) | | C01G49/10 |
| A | DATABASE WPI Section Ch, Week 7834 Derwent Publications Ltd., London, GB; Class D15, AN 78-61360A XP002057717 & JP 53 082 696 A (DAIKIN IND LTD) , 21 juillet 1978 * abrégé * | | |

DOMAINES TECHNIQUES RECHERCHES (Int.Cl.6)

C01G

Le présent rapport a été établi pour toutes les revendications

| Lieu de la recherche | Date d'achevement de la recherche | Examinateur |
|---|---|---|
| LA HAYE | 4 mars 1998 | LIBBERECHT, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)